# EUROPÄISCHE PATENTANMELDUNG

(11) **EP 3 974 353 A1**
(43) Veröffentlichungstag der Anmeldung: **30.03.2022**
(21) Anmeldenummer: 21198436.4
(22) Anmeldetag: 23.09.2021
(51) Int. Cl.: B65G 47/22, B65G 47/96

(54) **VORRICHTUNG ZUR AUSRICHTUNG VON PACKSTÜCKEN**

(30) Priorität: 25.09.2020 DE 102020125077
(71) Anmelder: Deutsche Post AG, 53113 Bonn (DE)
(72) Erfinder: Gharz, Usama, 16348 Wandlitz (DE)
(74) Vertreter: dompatent von Kreisler Selting Werner - Partnerschaft von Patent- und Rechtsanwälten mbB

(57) **Zusammenfassung**

Vorrichtung zur Ausrichtung von Packstücken insbesondere in einem Sorter mit einem ersten Verbindungselement zur Verbindung mit einer Packstückbeförderung und einem mit dem ersten Verbindungselement verbundenen Leitelement, wobei das Leitelement eine Anlagefläche ausbildet, die mit den Packstücken in Kontakt kommt zur Ausrichtung, insbesondere zur Wiederausrichtung der Packstücke. Dabei ist die Anlagefläche zumindest teilweise gekrümmt ausgebildet.

## Beschreibung

Die vorliegende Erfindung betrifft eine Vorrichtung zur Ausrichtung, insbesondere zur Wiederausrichtung von Packstücken insbesondere in einem Sorter. Weiterhin betrifft die vorliegende Erfindung eine Packstückbeförderung mit einer solchen Vorrichtung sowie einen Sorter mit einer solchen Packstückbeförderung.

Bei dem Transport von Packstücken insbesondere innerhalb eines Sorters zur Beförderung, Sortierung und Verteilung mittels einer Packstückbeförderung kommt es immer wieder zu Störungen, da einzelne Packstücke, insbesondere während Kurvenfahrten über die Sollbahn herausgetrieben werden und seitlich über die Packstückbeförderung hervorstehen. Ebenso werden einzelne Packstücke durch sich kippende und aufrichtende Schalen verdreht.

Überstehende Pakete neigen jedoch dazu, sich querzustellen bzw. sich zu verkeilen und behindern somit eine Bewegung der nachfolgenden Packstücke. Insbesondere aufgrund der hohen Geschwindigkeit bekannter Packstückbeförderungen können dabei eine große Anzahl von Packstücken von der Packstückbeförderung herunterfallen, welche sodann händisch wieder in den Ablauf eingeführt werden müssen. Ebenso besteht die Gefahr der Beschädigung der Packstücke oder sogar einer Beschädigung des Sorters bzw. der Packstückbeförderung. Gleichzeitig bestehen eine erhebliche Verletzungsgefahr bei der Behebung solcher Störungen einerseits durch herabfallende Packstücke selbst oder auf Grund der schwer zugänglichen Arbeitsbereiche.

Aufgabe der vorliegenden Erfindung ist es eine Vorrichtung zu schaffen, durch die eine Störung einer Packstückbeförderung bzw. eines Sorters verursacht durch überstehende Packstücke vermieden wird.

Die Aufgabe wird gelöst durch eine Vorrichtung zur Ausrichtung von Packstücken gemäß Anspruch 1, durch eine Packstückbeförderung gemäß Anspruch 14, sowie einen Sorter gemäß Anspruch 15.

Die erfindungsgemäße Vorrichtung zur Ausrichtung von Packstücken insbesondere in einem Sorter weist ein erstes Verbindungselement auf zur Verbindung mit einer Packstückbeförderung. Mit dem ersten Verbindungselement ist ein Leitelement verbunden. Dabei ist das Verbindungselement insbesondere an einem ersten Ende des Leitelements angeordnet. Dabei wird durch das Leitelement eine Anlagefläche ausgebildet, die mit den Packstücken in Kontakt kommt zur Ausrichtung, insbesondere zur Wiederausrichtung der Packstücke. Insbesondere findet im Normalbetrieb keine Berührung zwischen der Vorrichtung und Packstücken statt. Bei einer Fehlausrichtung und/oder Überstehen des Packstückes, kommt das Packstück in Kontakt mit der Anlagefläche des Leitelements und wird von diesem wiederausgerichtet, also wieder auf seine Sollbahn zurückgeführt. Dabei ist die Anlagefläche zumindest teilweise gekrümmt ausgebildet. Durch die Krümmung wird ein optimaler Kraftübertrag von dem Leitelement auf das Packstück gewährleistet, sodass das Packstück auf die Sollbahn der Packstückbeförderung zurückbewegt wird. Hierbei zeigt sich, dass durch die gekrümmt ausgebildete Anlagefläche Packstücke früher auf die Sollbahn der Packstückbeförderung zurückbewegt werden, sodass eine kürzere Länge des Leitelements ausreichend ist im Vergleich zu einer ungekrümmten Anlagefläche. Gleichzeitig ist sichergestellt, dass durch die Krümmung ein unerwünschtes Verdrehen der Sendung gerade vermieden wird.

Vorzugsweise ist das Leitelement fest mit dem ersten Verbindungselement verbunden. Hierdurch wird sichergestellt, dass auch bei schweren Packstücken eine ausreichende Kraftübertragung auf das Packstück erfolgen kann, sodass dieses Packstück zurück auf die Sollbahn der Packstückbeförderung bewegt werden kann.

Vorzugsweise ist das Leitelement zumindest teilweise flexibel ausgebildet. Hierdurch federt das Leitelement je nach Gewicht der Sendung entsprechend ein. Aufgrund des Einfederns des Leitelements kann eine optimale Kraftübertragung auf das Packstück erfolgen, sodass dieses zurück auf die Sollbahn der Packstückbeförderung bewegt wird. Dabei führen leichte Packstücke lediglich zu einer geringen Auslenkung des Leitelements, wohingegen schwere Packstücke eine größere Auslenkung des Leitelements verursachen. Aufgrund der flexiblen Ausgestaltung des Leitelements wird somit eine Rückstellkraft erzeugt. Dabei ist die Rückstellkraft abhängig vom Gewicht des jeweiligen Packstücks, sodass eine größere Rückstellkraft bei schwereren Packstücke erzeugt wird als bei leichten Packstücken, um diese auf die Sollbahn der Packstückbeförderung zurückzubewegen. Insbesondere durch die flexible Ausgestaltung des Leitelements selbst sind keine Scharniere erforderlich, um eine Beweglichkeit des Leitelements zu gewährleisten. Hierdurch wird der Aufbau vereinfacht und Verschleißteile wie beispielsweise Scharniere vermieden.

Vorzugsweise ist ein zweites Verbindungselement vorgesehen zur Verbindung mit einer Packstückbeförderung. Dabei ist das zweite Verbindungselement insbesondere an einem dem ersten Ende des Leitelements gegenüberliegenden zweiten Ende angeordnet. Dabei ist das Leitelement beweglich mit dem zweiten Verbindungselement verbunden, sodass insbesondere bei einer flexiblen Ausgestaltung des Leitelements, eine Beweglichkeit zumindest eines Teils des Leitelements gewährleistet ist. Dabei ist insbesondere das zweite Verbindungselement im montierten Zustand in der Bewegungsrichtung der Packstückbeförderung hinter dem ersten Verbindungselement angeordnet.

Vorzugsweise weist das zweite Verbindungselement ein Federelement auf zur beweglichen Verbindung mit dem Leitelement. Insbesondere weist dabei das zweite Verbindungselement genau ein Federelement auf. Durch Vorsehen lediglich eines Federelementes wird eine Beweglichkeit des Leitelements gewährleistet, um sich an einzelne Packstücke anzupassen. Dabei ist die Beweglichkeit durch das zweite Verbindungselement insbesondere gegeben entlang einer Achse, welche senkrecht zu der Anlagefläche liegt. Somit ist eine Bewegung des Leitelements in transversaler Richtung zu der Anlagefläche möglich, um sich an die Form der Packstücke geeignet anzupassen.

Vorzugsweise weist das Federelement ein erstes Führungselement auf, welches mit dem Leitelement verbunden ist. Weiterhin weist das Federelement ein mit dem ersten Führungselement verschiebbar verbundenes bzw. ineinandergreifendes stationäres zweites Führungselement auf. Hierbei ist insbesondere das erste Führungselement relativ zu dem zweiten Führungselement entgegen der Federkraft des Federelements verschiebbar. Dabei weisen insbesondere das erste Führungselement und das zweite Führungselement ein Spiel auf, sodass eine transversale, d.h. senkrecht zur Flexrichtung des Leitelements, Beweglichkeit gegeben ist. Insbesondere handelt es sich bei dem ersten Führungselement und dem zweiten Führungselement um eine Führungsbuchse und eine darin geführte Führungsschiene. Dabei weist insbesondere die Führungsbuchse einen Öffnungsdurchmesser auf, welcher größer ist als der Außendurchmesser der Führungsschiene, sodass hierdurch die Beweglichkeit gewährleistet wird. Insbesondere sind zwei Führungsbuchen vorgesehen, die hintereinander angeordnet sind entlang der Führungsschiene, wobei eine Öffnung einer ersten Führungsbuche größer ausgebildet ist als eine Öffnung einer zweiten Führungsbuchse. Hierdurch wird eine insbesondere transversale Beweglichkeit des Leitelements erreicht. Dabei ist die erste Führungsbuchse ausgehend von dem Leitelement vor der zweiten Führungsbuches angeordnet und weiterhin weist insbesondere die Öffnung der zweiten Führungsbuche einen Durchmesser auf, der dem Außendurchmesser der Führungsschiene entspricht.

Vorzugsweise ist ein drittes Verbindungselement vorgesehen zur Verbindung mit einer Packstückbeförderung, wobei das Leitelement fest mit dem dritten Verbindungselement verbunden ist. Dabei ist insbesondere das dritte Verbindungselement zwischen dem ersten Verbindungselement und dem zweiten Verbindungselement angeordnet.

Vorzugsweise ist ein erster Abschnitt des Leitelements definiert zwischen dem ersten Verbindungselement und dem dritten Verbindungselement. Weiterhin ist ein zweiter Abschnitt des Leitelements definiert zwischen dem dritten Verbindungselement und dem zweiten Verbindungselement. Dabei weisen der erste Abschnitt und der zweite Abschnitt ein Längenverhältnis vom ersten Abschnitt zum zweiten Abschnitt von 1:1 bis 1:10 und insbesondere 1:2 bis 1:3 auf.

Vorzugsweise ist der erste Abschnitt gerade ausgebildet und weist somit keine Krümmung auf. Alternativ oder zusätzlich hierzu ist der erste Abschnitt unflexibel ausgebildet. Somit wird durch den ersten Abschnitt der Anlagefläche ein Abschnitt gebildet, welcher eine große Rückstellkraft auf insbesondere schwere und große Packstücke erzeugt, um diese auf die Sollbahn der Packstückbeförderung zurückzubewegen.

Vorzugsweise ist der erste Abschnitt gewinkelt angeordnet zu der Bewegungsrichtung der Packstückbeförderung. Dabei ist der erste Abschnitt entlang der Bewegungsrichtung im montierten Zustand in Richtung der Packstückbeförderung gewinkelt.

Vorzugsweise ist der zweite Abschnitt gekrümmt bzw. zumindest teilweise gekrümmt ausgebildet. Alternativ oder zusätzlich hierzu ist der zweite Abschnitt flexibel ausgebildet und federt somit entsprechend dem Gewicht des Packstückes ein. Hierdurch wird eine optimale Rückführung der jeweiligen Packstücke erzeugt, welche eine an das jeweilige Gewicht der Packstücke angepasste Rückstellkraft bereitstellt.

Vorzugsweise ist eine Angelfläche vorgesehen, insbesondere im Bereich des zweiten Abschnitts, wobei das Leitelement an die Angelfläche beim Einfedern anliegt. Hierbei erfolgt die Flexbewegung des Leitelements um die Angelfläche als Angelpunkt. Durch die Anpassung der Position der Angelfläche kann das Flexverhalten des Leitelements angepasst werden an die jeweilige Anwendung der Vorrichtung und ein optimales Flexverhalten des Leitelements sichergestellt werden.

Vorzugsweise weist die Anlagefläche eine erste Krümmung auf und eine der ersten Krümmung entgegengesetzte zweite Krümmung. Insbesondere, sofern ein erster Abschnitt und ein zweiter Abschnitt definiert ist durch das Leitelement, weist die Krümmung des zweiten Abschnitts eine erste Krümmung auf und eine der ersten Krümmung entgegengesetzte zweite Krümmung. Im montierten Zustand sind dabei die erste Krümmung und zweite Krümmung in Bewegungsrichtung hintereinander angeordnet. Insbesondere ist die erste Krümmung, beginnend mit dem ersten Verbindungselement bzw. dem dritten Verbindungselement vorgesehen, wohingegen die zweite Krümmung mit dem zweiten Verbindungselement endet. Dabei weist die erste Krümmung im montierten Zustand in Richtung der Packstückbeförderung, wobei die zweite Krümmung von dieser wegführt. Hierdurch wird eine im Wesentlichen S-förmige Anlagefläche geschafft. Dabei können die erste Krümmung und die zweite Krümmung gleich oder unterschiedlich hinsichtlich den Krümmungsparametern ausgebildet sein, wie beispielsweis Krümmungsradius und Länge. Dabei wird durch die erste Krümmung zunächst eine ausreichende Kraft erzeugt, um das jeweilige Packstück in Richtung der Sollbahn der Packstückbeförderung zu beschleunigen. Diese Kraft wird reduziert durch die zweite Krümmung, wodurch insbesondere eine ungewollte Verdrehung der Packstücke am Ende der Anlagefläche vermieden wird.

Vorzugsweise ist die Anlagefläche am zweiten Ende im Wesentlichen parallel zur Förderrichtung der Packstückbeförderung. Hierdurch wird sichergestellt, dass im Wesentlichen keine Kraft mehr auf das Packstück am zweiten Ende des Leitelements übertragen wird. Hierdurch wird effektiv ein ungewolltes Verdrehen der Packstücke in der Packstückbeförderung verhindert.

Vorzugsweise wird die Anlagefläche gebildet durch Polyethylen (PE). Bevorzugt wird die Anlagefläche gebildet durch PE mit einer besonders hohen molaren Masse (PE-UHMW - "Ultra High Molar Weight"). Besonders bevorzugt wird die Anlagefläche gebildet durch TIVAR^{®} DrySlide Insbesondere besteht das Leitelement vollständig aus PE, bevorzugt PE-UHMW und besonders bevorzugt aus TIVAR^{®} DrySlide. Hierdurch wird eine geringe Reibung zwischen der Anlagefläche und den jeweiligen Packstücken erzeugt. Durch die geringe Reibung wird ein ungewolltes Verdrehen der Packstücke verhindert. Gleichzeitig wird der Verschleiß der Vorrichtung reduziert und sichergestellt, dass durch das Leitelement eine zur Förderrichtung der Packstückbeförderung im Wesentlichen senkrecht gerichtete Rückstellkraft durch die Vorrichtung erzeugt wird.

Vorzugsweise weist das Leitelement ein Gewicht von 3-10 kg, insbesondere 4-5 kg auf. Durch das geringe Gewicht wird sichergestellt, dass auch bei leichten Packstücken ein Einfedern des Leitelements ermöglicht wird.

Vorzugsweise weist das Leitelement eine Länge von weniger als 2 m und insbesondere weniger als 1,5 m auf. Somit ist der Platzbedarf für die Vorrichtung insbesondere innerhalb eines Sorters gering. Hierbei wird sichergestellt, dass durch die zumindest teilweise gekrümmte Anlagefläche eine ausreichende Rückstellkraft auf das jeweilige Packstücken erzeugt wird, um diese zuverlässig und möglichst störungsfrei auf die Sollbahn der Packstückbeförderung zurückzubewegen.

Weiterhin betrifft die vorliegende Erfindung eine Packstückbeförderung mit mindestens einem Förderelement zur Beförderung der Packstücke und einer stationär an der Packstückbeförderung angeordneten Vorrichtung wie vorstehend beschrieben. Dabei steht die Anlagefläche senkrecht zur Bewegungsrichtung des Förderelements und erstreckt sich in vertikaler Richtung bei horizontaler Bewegung des Förderelements. Dabei ist die Vorrichtung seitlich neben dem Förderelement angeordnet, insbesondere in einem Abstand von 10 mm bis 100 mm und bevorzugt 20 mm bis 70 mm. Im Normalbetrieb findet keine Berührung zwischen der Vorrichtung und den auf dem Förderelement beförderten Packstücken statt. Bei einer Fehlausrichtung und/oder Herausragen des Packstückes über das Förderelement hinaus, kommt das Packstück in Kontakt mit der Anlagefläche des Leitelements und wird von diesem wiederausgerichtet, also wieder auf seine Sollbahn zurückgeführt.

Vorzugsweise weist die Packstückbeförderung mindestens zwei Vorrichtungen auf wie vorstehend beschrieben. Dabei sind die Vorrichtungen auf den gegenüberliegenden Seiten der Packstückbeförderung angeordnet. Somit werden durch die erste Vorrichtung zunächst Packstücke auf die Sollbahn zurückgeführt, welche auf der einen Seite überstehen und nachfolgend mittels der zweiten Vorrichtung Packstücke, welche auf der anderen Seite überstehen.

Vorzugsweise sind die beiden Vorrichtungen entlang der Bewegungsrichtung der Packstückbeförderung versetzt angeordnet.

Vorzugsweise weist das Förderelement ein Förderband, Förderrollen, eine Vielzahl von Transportschalen oder dergleichen auf.

Weiterhin betrifft die vorliegende Erfindung einen Sorter mit mindestens einer Packstückbeförderung wie vorstehend beschrieben zur Beförderung, Sortierung und/oder Verteilung von Packstücken.

Nachfolgend wird die Erfindung anhand bevorzugt Ausführungsform unter Bezugnahme auf die beigefügten Zeichnungen näher erläutert.

Es zeigen:
Figur 1 eine Packstückbeförderung mit einer Vorrichtung gemäß der vorliegenden Erfindung in Draufsicht,
Figur 2 die Vorrichtung der Figur 1 im eingefederten Zustand,
Figur 3 eine Detailansicht des zweiten Verbindungselements der Vorrichtung gemäß Figur 1 und
Figur 4 eine Schnittansicht der Packstückbeförderung gemäß Figur 1.

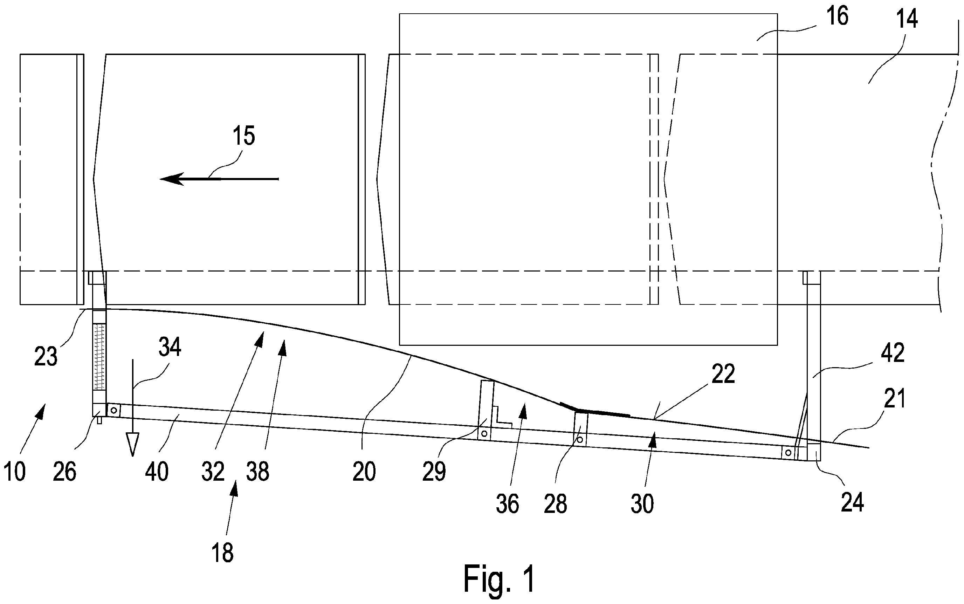

Die Packstückbeförderung 10 gezeigt in Figur 1 ist beispielsweise als Schalen-Packstückbeförderung ausgebildet und weist hierzu eine Vielzahl von Schalen 14 auf, auf denen Packstücke 16, wie beispielsweise Pakete oder dergleichen, transportiert werden entlang einer Bewegungsrichtung 15. Dabei ist ein Packstück im Wesentlichen auf einer Schale 14 angeordnet. Jedoch gerade bei großen Packstücken 16, erstreckt sich das Packstück 16 über mehrere Schalen 14. Insbesondere in diesem Fall kann bei Kurvenfahrten und sich kippende und aufrichtende Schalen der Packstückbeförderung 10 das Packstücke 16 verrutschen, sodass das Packstück 16 seitlich über die Schalen 14 hinausragt. Hierdurch kann sich das Packstücke 16 mit anderen Bauteilen der Packstückbeförderung 10 verkeilen, wodurch die Förderrichtung für nachfolgende Packstücke blockiert ist und nachfolgende Packstücke aufgrund der fortgeführten Bewegung der Schalen 14 aus ihrer Sollbahn herausbefördert werden und von der Packstückbeförderung 10 herunterfallen. Diese müssen sodann händisch wieder in den Ablauf eingefügt werden, was kosten- und zeitintensiv ist. Ebenfalls können hierdurch die Packstücke 16 beschädigt werden oder eine Beschädigung an der Packstückbeförderung 10 bzw. dem Sorter erfolgen.

Durch die erfindungsgemäße Vorrichtung 18 werden die Packstücke 16, welche nicht mehr auf der Sollbahn, insbesondere innerhalb der Schalen 14, bewegt werden, entsprechend ausgerichtet, sodass ein Verhaken mit stationären Bauteilen der Packstückbeförderung 10 gerade vermieden wird. Im Normalbetrieb, also im Falle von bereits korrekt ausgerichteten Packstücken 16, findet keine Berührung zwischen der Vorrichtung 18 und den beförderten Packstücken 16 statt. Eine Beeinflussung des Packstückstroms durch die Vorrichtung 18 bei vollständig ausgerichteten Packstücken 16 wird somit vermieden. Verlässt jedoch ein Packstück 16 seine Sollbahn aufgrund einer Fehlausrichtung und/oder einem insbesondere seitlichen Herausragen des Packstückes 16 über die Packstückbeförderung 10, kommt das Packstück 16 sodann in Kontakt mit der Vorrichtung 18, welches die Packstücke 16 jeweils auf ihre Sollbahn wiederausrichtet und zurückführt.

Hierzu weist die Vorrichtung 18 ein Leitelement 20 auf, wobei durch das Leitelement 20 eine Anlagefläche 22 ausgebildet wird, mit der die Packstücke 16 in Kontakt kommen, an diesem entlang bewegt werden und hierdurch entsprechend ausgerichtet werden. Dabei ist das Leitelement 20 mit der Packstückbeförderung 10 mittels einem ersten Verbindungselement 24, einem zweiten Verbindungselement 26 und einem dritten Verbindungselement 28 verbunden. Dabei sind das erste Verbindungselement 24 und das dritte Verbindungselement 28 unbeweglich bzw. fest ausgebildet. Dahingehend ist das zweite Führungselement beweglich ausgebildet. Dabei ist das erste Verbindungselement 24 am ersten Ende 21 des Leitelements 20 angeordnet. Das zweite Verbindungselement 26 ist an einem zweiten Ende 23 des Leitelements 20 angeordnet. Das dritte Verbindungselement 28 ist zwischen dem ersten Verbindungselement 24 und dem zweiten Verbindungselement 26 angeordnet.

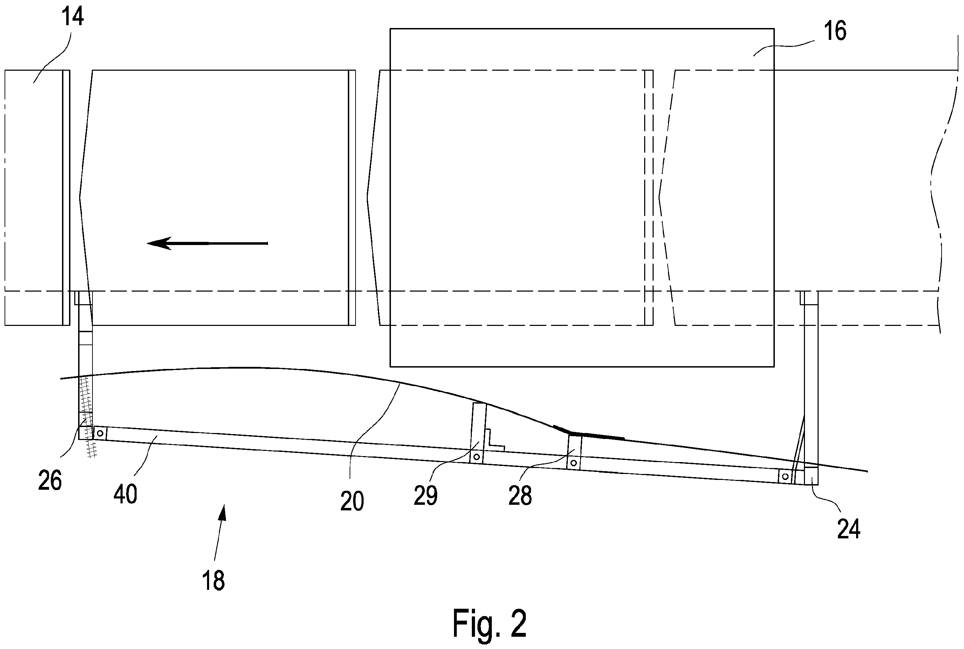

Durch das erste Verbindungselement 24 und das dritte Verbindungselement 28 wird ein erster Abschnitt 30 des Leitelements 20 definiert. In dem ersten Abschnitt 30 weist das Leitelement 20 lediglich eine geringe Beweglichkeit auf. Weiterhin ist in dem ersten Bereich 30 die Anlagefläche 22, gebildet durch das Leitelement 20, gerade bzw. ungekrümmt. Dabei ist der erste Abschnitt 30 des Leitelements 20 gewinkelt in Richtung der Packstückbeförderung 10 entlang der Bewegungsrichtung 15. Weiterhin ist zwischen dem dritten Verbindungselement 28 und dem zweiten Verbindungselement 26 ein zweiter Abschnitt 32 definiert. In dem zweiten Abschnitt 32 ist das Leitelement beweglich entsprechend dem Pfeil 34. Hierzu ist das Leitelement 20 an seinem zweiten Ende 23 beweglich mittels dem zweiten Verbindungselement 26 verbunden. Kommt somit ein Packstück 16 mit dem ersten Abschnitt 30 des Leitelements 20 in Kontakt, wird unabhängig von dem Gewicht des Packstücks 16 eine Rückstellkraft auf das Packstück 16 erzeugt, um dieses auf seine Sollbahn in der Packstückbeförderung zu bewegen. Dabei bewegt sich das Packstück 16 insbesondere aufgrund der Bewegung der Packstückbeförderung entlang der Bewegungsrichtung 15 entlang der Anlagefläche 22 und gelangt somit zum zweiten Abschnitt 32 des Leitelements 20. Aufgrund der Flexibilität des Leitelements 20 wird der zweite Abschnitt 32 in Richtung des Pfeils 34 ausgelenkt, wie in Figur 2 gezeigt. Hierbei erfolgt die Auslenkung im Wesentlichen proportional zum Gewicht des Packstücks 16. Dabei ist eine Angelfläche 29 vorgesehen, welche als Angelpunkt für die Flexbewegung des Leitelements 20 im zweiten Abschnitt 32 dient. Gleichzeitig wird durch die Auslenkung des zweiten Abschnitts 32 eine Rückstellkraft auf das Packstück 16 erzeugt, um dieses zurück auf seine Sollbahn der Packstückbeförderung 10 zu bewegen. Aufgrund der vorgesehenen Krümmung des zweiten Abschnitts 32 des Leitelements 20 wird eine ausreichende Rückstellkraft auf das Packstück 16 frühzeitig erreicht. Hierdurch kann die Gesamtlänge des Leitelements 20 kurz gewählt werden. Hierzu weist der erste Abschnitt eine erste Krümmung 36 auf in Richtung der Packstückbeförderung. Diese geht sodann entlang der Bewegungsrichtung 15 über in eine entgegengesetzte zweite Krümmung 38. Dabei ist am zweiten Ende 23 des Leitelements 10 die Anlagefläche 22 im Wesentlichen parallel zur Bewegungsrichtung 15 der Packstückbeförderung. Hierdurch wird sichergestellt, dass ein ungewolltes Verdrehen der Packstücke am Ende der Leitvorrichtung 20 gerade vermieden wird.

Insbesondere besteht das Leitelement 20 vollständig aus TIVAR^{®} DrySlide und weist somit einen geringen Reibungskoeffizienten auf. Hierdurch wird sichergestellt, dass durch die Leitvorrichtung 20 im Wesentlichen eine senkrecht zur Bewegungsrichtung 15 wirkende Rückstellkraft auf das Packstück 16 aufgebracht wird. Ein durch die Reibung entstehendes Drehmoment am Packstück 16 wird minimiert, wodurch ein ungewolltes Verdrehen des Packstück 16 ebenfalls vermieden wird.

Wie in Figur 1 gezeigt sind das erste Verbindungselement 24, das zweite Verbindungselement 26 und das dritte Verbindungselement 28 über einen gemeinsamen Rahmen 40 und entsprechende Halterungen 42 mit der Packstückbeförderung 10 verbunden. Andere Ausführungen sind selbstverständlich ebenfalls möglich.

Ebenso ist in Figuren ein Schalen-Packstückbeförderung gezeigt. Alternativ zu der Verwendung von Schalen 14 ist die Vorrichtung ebenfalls verwendbar bei Packstückbeförderungen mit einem Förderelement ausgebildet als Förderband, Förderrollen oder dergleichen.

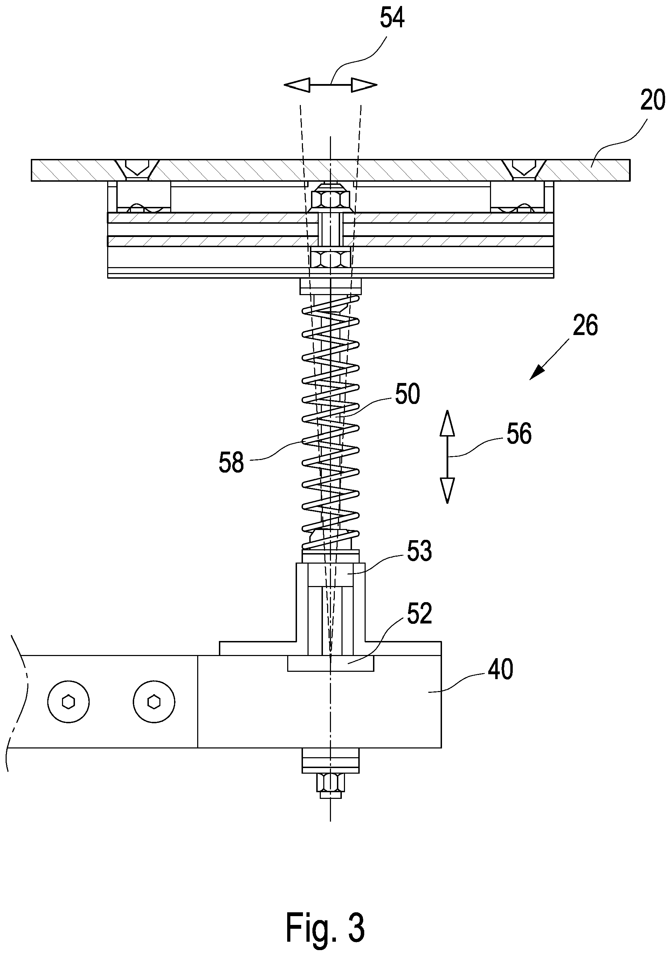

Figur 3 zeigt das zweite Verbindungselement 26. Das zweite Verbindungselement 26 weist ein erstes Führungselement 50 auf, welches mit dem Leitelement 20 verbunden ist. Insbesondere ist das erste Führungselement 50 ausgebildet als Führungsstift. Das erste Führungselement 50 wird dabei in einem zweiten Führungselement 52 des zweiten Verbindungselements 26geführt. Dabei weist das zweite Verbindungselement 26 eine erste Führungsbuchse 52 und eine in Richtung des Leitelements beabstandet angeordnete zweite Führungsbuche 53 auf. Dabei ist der Führungsstift 50 innerhalb der ersten Führungsbuchse 52 und der zweiten Führungsbuche 53 entsprechend dem Pfeil 56 verschiebbar gelagert, wobei ein Federelement 58 vorgesehen ist. Dabei ist die Verschiebbarkeit in Richtung 56 gewährleistet entgegen der Federkraft des Federelements 58. Eine Bewegung entlang der Richtung 56 erfolgt dabei bei einem Einfedern des Leitelements, sofern dieses in Kontakt kommt mit der Anlagefläche 22 des Leitelements 20.

Weiterhin weist die erste Führungsbuche 52 eine Öffnung auf zur Führung des Führungsstiftes 50, wobei die Öffnung der ersten Führungsbuche 52 im Wesentlichen dem Außendurchmesser des Führungsstifts 50 entspricht, so dass weiterhin eine Verschiebbarkeit entsprechend dem Peil 56 gewährleistet ist. Weiterhin weist die zweite Führungsbuchse eine Öffnung auf zur Führung des Führungsstiftes 50, wobei die Öffnung der zweiten Führungsbuchse einen Durchmesser aufweist, der größer gewählt ist als der Durchmesser der Öffnung der ersten Führungsbuchse 52. Hierdurch wird eine transversale Beweglichkeit entsprechend dem Pfeil 54 erreicht, wobei durch geeignete Wahl der Durchmesser die erforderliche Beweglichkeit an die Anwendung angepasst werden kann. Durch die transversale Beweglichkeit passt sich das Leitelement 20 den jeweiligen Formen der Packstücke an und eine effektive Führung der Packstücke wird erreicht ohne Beschädigung der Packstücke oder der Vorrichtung selbst.

Durch die transversale Beweglichkeit des zweiten Verbindungselements 26 entsprechend dem Pfeil 54 ist eine transversale Beweglichkeit des Leitelements 20 gewährleistet. Dies gilt insbesondere, da genau ein Federelement 58 sowie genau ein erstes Führungselement 50 und ein zweites Führungselement 52 vorgesehen sind. Durch die transversale Beweglichkeit kann sich das Leitelement 20 an unterschiedliche Formen von Packstücken 16 optimal anpassen.

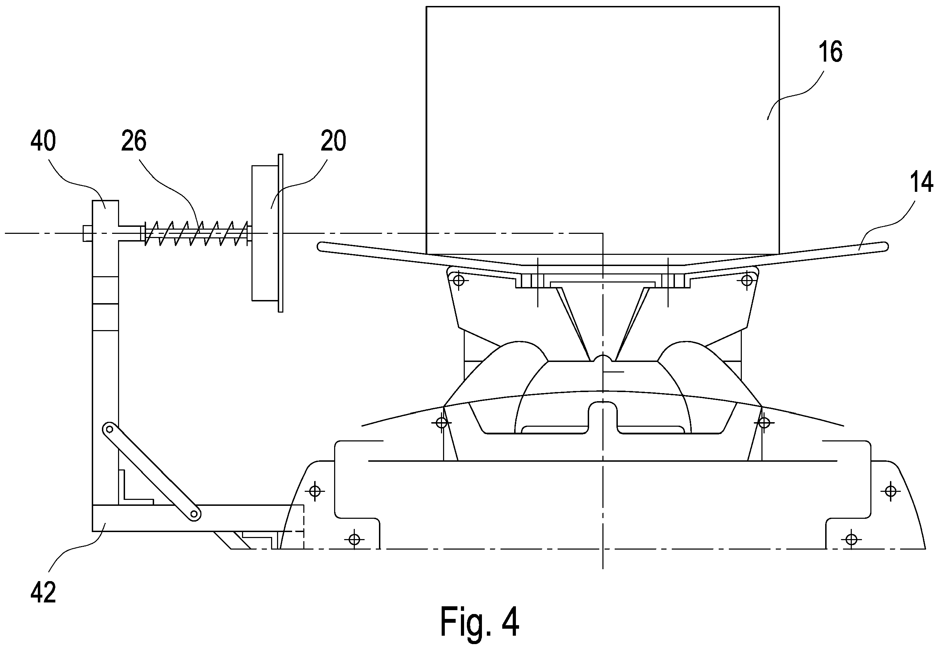

Wie aus Figur 4 ersichtlich ist die Vorrichtung neben den Transportelementen, insbesondere ausgebildet als Schale 14 in einem Abstand angeordnet, welche insbesondere zwischen 20 mm und 100 mm beträgt. Dabei erstreckt sich das Leitelement entlang der Bewegungsrichtung 15. Das Leitelement weist dabei insbesondere eine Länge von weniger als 2 m und bevorzugt weniger als 1,5 m auf. Somit ist eine kompakte Bauweise der Vorrichtung 18 gewährleistet.

Insbesondere durch die gekrümmte Anlagefläche 22 wird ein sicheres Zurückführen der Packstücke in die Sollbahn der Packstückbeförderung 10 gewährleistet, wobei ein ungewolltes Drehen der Packstücke 16 verhindert wird. Gleichzeitig ist die Vorrichtung 18 vollständig mechanisch und kommt ohne wesentliche Verschleißteile aus.

## Patentansprüche

1. Vorrichtung zur Ausrichtung von Packstücken insbesondere in einem Sorter, mit
einem ersten Verbindungselement zur Verbindung mit einer Packstückbeförderung,
einem mit dem ersten Verbindungselement verbundenen Leitelement, wobei das Leitelement eine Anlagefläche ausbildet, die mit den Packstücken in Kontakt kommt zur Ausrichtung, insbesondere zur Wiederausrichtung der Packstücke,
wobei die Anlagefläche zumindest teilweise gekrümmt ausgebildet ist.

2. Vorrichtung nach Anspruch 1, **dadurch gekennzeichnet, dass** Leitelement fest mit dem ersten Verbindungselement verbunden ist.

3. Vorrichtung nach Anspruch 1 oder 2, **dadurch gekennzeichnet, dass** das Leitelement zumindest teilweise flexibel ist.

4. Vorrichtung nach einem der Ansprüche 1 bis 3, **gekennzeichnet durch** ein zweites Verbindungselement zur Verbindung mit einer Packstückbeförderung, wobei das Leitelement beweglich mit dem zweiten Verbindungselement verbunden ist, wobei insbesondere das zweite Verbindungselement im montierten Zustand in Bewegungsrichtung hinter dem ersten Verbindungselement angeordnet ist.

5. Vorrichtung nach Anspruch 4, **dadurch gekennzeichnet, dass** das zweite Verbindungselement ein und insbesondere genau ein Federelement aufweist.

6. Vorrichtung nach Anspruch 4 oder 5, **dadurch gekennzeichnet, dass** das zweite Verbindungselement ein erstes Führungselement aufweist, welches mit dem Leitelement verbunden ist und ein mit dem ersten Führungselement verschiebbar verbundenes stationäres zweites Führungselement, wobei insbesondere das erste Führungselement und das zweite Führungselement ein Spiel aufweisen, so dass eine transversale Beweglichkeit gegeben ist.

7. Vorrichtung nach einem der Ansprüche 1 bis 6, **gekennzeichnet durch** ein drittes Verbindungselement zur Verbindung mit einer Packstückbeförderung, wobei das Leitelement fest mit dem dritte Verbindungselement verbunden ist, wobei insbesondere das dritte Verbindungselement zwischen dem ersten Verbindungselement und dem zweiten Verbindungselement angeordnet ist.

8. Vorrichtung nach Anspruch 7, **dadurch gekennzeichnet, dass** ein erster Abschnitt des Leitelements definiert wird zwischen dem ersten Verbindungselement und dem dritten Verbindungselement und ein zweiter Abschnitt des Leitelements definiert wird zwischen dem dritten Verbindungselement und dem zweiten Verbindungselement.

9. Vorrichtung nach Anspruch 8, **dadurch gekennzeichnet, dass** der erste Abschnitt gerade und/oder unflexible ausgebildet ist.

10. Vorrichtung nach Anspruch 8 oder 9, **dadurch gekennzeichnet, dass** der zweite Abschnitt gekrümmt und/oder flexibel ausgebildet ist.

11. Vorrichtung nach einem der Ansprüche 1 bis 10, **dadurch gekennzeichnet, dass** die Anlagefläche und insbesondere der zweite Abschnitt eine erste Krümmung aufweist und eine der ersten Krümmung entgegengesetzte zweite Krümmung, wobei insbesondere im montierten Zustand die erste Krümmung in Richtung der Packstückbeförderung weist und die zweite Krümmung von dieser wegführt.

12. Vorrichtung nach einem der Ansprüche 1 bis 9, **dadurch gekennzeichnet, dass** die Anlagefläche durch PE, bevorzugt UHMW-PE, besonders bevorzugt TIVAR^{®} DrySlide gebildet wird und insbesondere das Leitelement vollständig aus Polyethylen, bevorzugt UHMW-PE, besonders bevorzugt TIVAR^{®} DrySlide besteht.

13. Vorrichtung nach einem der Ansprüche 1 bis 12, **dadurch gekennzeichnet, dass** das Leitelement eine Länge von weniger als 2m und insbesondere weniger als 1,5m aufweist.

14. Packstückbeförderung mit mindestens einem Förderelement zur Beförderung der Packstücke und einer Vorrichtung nach einem der Ansprüche 1 bis 13.

15. Sorter mit einer Packstückbeförderung nach Anspruch 14 zur Beförderung, Sortierung und/oder Verteilung von Packstücken.
